# EUROPÄISCHE PATENTSCHRIFT

(11) **EP 4 146 409 B1**
(45) Veröffentlichungstag und Bekanntmachung des Hinweises auf die Patenterteilung: **26.02.2025**
(21) Anmeldenummer: 21725461.4
(22) Anmeldetag: 06.05.2021
(51) Int. Cl.: B07C 5/02

(54) **PRÜFANLAGE FÜR EINE MEHRZAHL VON VEREINZELBAREN PRÜFOBJEKTEN**
TEST SYSTEM FOR A LARGE NUMBER OF TEST OBJECTS THAT CAN BE SINGLED OUT
SYSTÈME D'ESSAI POUR UN GRAND NOMBRE D'OBJETS D'ESSAI QUI PEUVENT ÊTRE SÉPARÉS

(30) Priorität: 06.05.2020 DE 102020112222
(43) Veröffentlichungstag der Anmeldung: 15.03.2023
(73) Patentinhaber: LAW-NDT Mess- und Prüfsysteme GmbH, 65623 Schiesheim (DE)
(72) Erfinder: MAHLLATI, Hamid Reza Shojaei, 65191 Wiesbaden (DE); KAISER, Christoph, 56368 Herold (DE)
(74) Vertreter: WSL Patentanwälte Partnerschaft mbB
(86) Internationale Anmeldenummer: PCT/EP2021/062060
(87) Internationale Veröffentlichungsnummer: WO 2021/224418

(56) Entgegenhaltungen:
- EP-A1- 2 105 216
- EP-A2- 0 230 583
- DE-A1- 3 200 075
- DE-A1- 4 329 193
- US-A1- 2008 117 581
- US-A1- 2020 101 498
- US-B2- 10 406 562

## Beschreibung

Die vorliegende Erfindung betrifft eine Prüfanlage für eine Mehrzahl von vereinzelbaren Prüfobjekten mit einer Zuführeinrichtung für die Mehrzahl von Prüfobjekten, einer Fördereinrichtung für die Mehrzahl von Prüfobjekten, einer Prüfeinheit und einer Ausstoßeinrichtung, wobei die Zuführeinrichtung derart ausgestaltet und angeordnet ist, dass die Mehrzahl von Prüfobjekten mittels der Zuführeinrichtung an einer Zuführposition der Fördereinrichtung zuführbar ist, wobei die Fördereinrichtung eine Mehrzahl von Aufnahmen aufweist, wobei jede der Aufnahmen derart ausgestaltet und angeordnet ist, dass in der Aufnahme jeweils genau ein Prüfobjekt aus der Mehrzahl von Prüfobjekten entlang eines Förderweges förderbar ist und dass jeweils zwei Prüfobjekte aus der Mehrzahl von Prüfobjekten entlang des Förderweges einen von der Mehrzahl von Aufnahmen vorgegebenen Abstand aufweisen, wobei die Prüfeinheit an einer Prüfposition an dem Förderweg angeordnet ist und wobei die Ausstoßeinrichtung an dem Förderweg hinter der Prüfeinheit angeordnet und derart ausgestaltet ist, dass die Mehrzahl von Prüfobjekten mittels der Ausstoßeinrichtung aus der Mehrzahl von Aufnahmen der Fördereinrichtung austoßbar ist.

Aus dem Stand der Technik sind Prüfanlagen zur Prüfung von in hohen Stückzahlen hergestellten, vereinzelbaren Prüfobjekten für die verschiedensten Anwendungsbereiche der industriellen Qualitätskontrolle bekannt. Dabei gilt es eine große Anzahl von Prüfobjekten in möglichst kurzer Zeit vollständig, d.h. im Rahmen einer 100%-Prüfung, zu prüfen. Zu diesem Zweck müssen die Prüfobjekte, die zunächst in Form von einem Schüttgut vorliegen, zunächst vereinzelt und dann so angeordnet werden, dass jedes der Prüfobjekte für sich und reproduzierbar geprüft werden kann. Zu diesem Zweck sind aus dem Stand der Technik Prüfanlagen für vereinzelbare Prüfobjekte bekannt, die eine Fördereinrichtung in Form eines Drehtellers aufweisen. Dabei hat der Drehteller entlang seines Außenumfangs eine Mehrzahl von schlitzförmigen Aufnahmen, in welchen jeweils ein Prüfobjekt geführt wird.

Derartige Prüfanlagen können nicht flexibel für verschiedene Prüfanwendungen eingesetzt werden. Zudem haben Prüfanlagen mit einer Fördereinrichtung in Form eines Drehtellers Einschränkungen bei der Genauigkeit der Prüfung.

Die DE 43 29 193 A1 offenbart ein Förderband, das quer zur Bewegungsrichtung durch Querwände in Kammern unterteilt und auf einer Seite durch seitliche Trennwände verschlossen ist. Das Band wird geneigt oder es wird ein Gebläse angeordnet, so dass die Körper gegen die seitlichen Trennwände gedrückt werden. Die Messköpfe sind in unmittelbarer Nähe der seitlichen Trennwände angeordnet und bestehen aus geteilten Lichtwellenleiterbündeln mit vorgeschalteter Linse. Die Vorrichtung kann beispielsweise zur sortenreinen Trennung von Kunststoffabfällen aus Hausmüll eingesetzt werden.

Die US 2020/101498 A1 offenbart eine Prüfanlage für die Verwendung mit einer Fördervorrichtung einschließlich Trägerstangen. Jede Trägerstange transportiert pelletförmige Artikel entlang einer vorgegebenen Bahn. Die Prüfanlage umfasst mindestens eine Kameraeinheit zum Erfassen einer vorgegebenen Eigenschaft der pelletförmigen Artikel, eine Entnahmeeinheit und eine Steuerung. Die der mindestens einen Kameraeinheit nachgeschaltete Entnahmeeinheit entfernt ausgewählte pelletförmige Artikel von der/den Trägerstange(n), abhängig davon, ob die Eigenschaft von der mindestens einen Kameraeinheit erfasst wird. Die Steuerung steht mit der mindestens einen Kameraeinheit und der Entnahmeeinheit in Verbindung. Die Steuerung liefert entsprechend der erfassten Kennlinie ein Signal an die Entnahmeeinheit. Die Entnahmeeinheit umfasst eine drehbare Auswurftrommel mit ausgedehnten Vakuumdüsen entlang ihrer Länge, die der Anzahl der in jeder Trägerstange transportierten Artikel entsprechen. Jede Vakuumdüse entfernt durch Saugen selektiv Artikel von den Trägerstangen.

Die EP 0 230 583 A2 offenbart eine Prüfanlage mit mehreren Förderrollen von Vereinzelern, die durch ein Fruchtausrichtungsband in Rotation versetzt werden, wodurch die darauf getragenen Früchte sich entsprechend der Bewegung des Bandes drehen, so dass sich die Rotationsachsen der Früchte, typischerweise Zitronen, entlang ihrer Stielachsen oder im Wesentlichen senkrecht zu der Laufrichtung der Vereinzeler ausrichten. Stromabwärts berühren die Rollen ein rotierendes, die Rotation beschleunigendes Band, um die Rotationsgeschwindigkeit der Rollen und der darauf ausgerichteten Früchte wesentlich zu erhöhen, damit optische Abtastvorrichtungen einen viel größeren Prozentsatz der Fruchtoberflächenbereiche scannen können.

Die US 2008/117581 A1 offenbart einen Laptop-Computer mit einem Anzeigegehäuse. Das Anzeigegehäuse dient zur Aufnahme des Displaypanels. Das Anzeigegehäuse verfügt über eine Öffnung zur wahlweisen Befestigung eines austauschbaren Kameramoduls oder eines austauschbaren Abdeckmoduls.

Demgegenüber ist es Aufgabe der vorliegenden Erfindung eine Prüfanlage bereitzustellen, die eine hohe Flexibilität aufweist. Zudem ist es Aufgabe der vorliegenden Erfindung eine Prüfanlage bereitzustellen, welche eine hohe Prüfgenauigkeit ermöglicht.

Zumindest eine der zuvor genannten Aufgaben wird durch eine Prüfanlage gemäß dem unabhängigen Anspruch 1 der vorliegenden Anmeldung gelöst.

Bereitgestellt wird erfindungsgemäß eine Prüfanlage für eine Mehrzahl von vereinzelbaren Prüfobjekten mit einer Zuführeinrichtung für die Mehrzahl von Prüfobjekten, einer Fördereinrichtung für die Mehrzahl von Prüfobjekten, einer Prüfeinheit und eine Ausstoßeinrichtung, wobei die Zuführeinrichtung derart ausgestaltet und angeordnet ist, dass die Mehrzahl von Prüfobjekten mittels der Zuführeinrichtung an einer Zuführposition der Fördereinrichtung zuführbar ist, wobei die Fördereinrichtung eine Mehrzahl von Aufnahmen aufweist, jede der Aufnahmen derart ausgestaltet und angeordnet ist, dass in der Aufnahme jeweils genau ein Prüfobjekt aus der Mehrzahl von Prüfobjekten entlang eines Förderweges förderbar ist und dass jeweils zwei Prüfobjekte aus der Mehrzahl von Prüfobjekten entlang des Förderweges einen von der Mehrzahl von Aufnahmen vorgegebenen Abstand aufweisen, wobei die Prüfeinheit an einer Prüfposition an dem Förderweg angeordnet ist wobei die Ausstoßeinrichtung an dem Förderweg hinter der Prüfeinheit angeordnet und derart ausgestaltet ist, dass die Mehrzahl von Prüfobjekten mittels der Ausstoßeinrichtung aus der Mehrzahl von Aufnahmen der Fördereinrichtung ausstoßbar ist, wobei die Fördereinrichtung derart ausgestaltet ist, dass der Förderweg zumindest einen geraden Abschnitt aufweist und die Prüfposition an dem zumindest einen geraden Abschnitt angeordnet ist, wobei die Prüfeinheit ein Gehäuse mit einem vorgegebenen Bauraum aufweist, wobei das Gehäuse mit der Fördereinrichtung lösbar verbindbar ist, so dass die Prüfeinheit durch eine andere Prüfeinheit austauschbar ist, und wobei das Gehäuse eine vorgegebene Breite aufweist und wobei der gerade Abschnitt des Förderweges ein ganzzahliges Vielfaches der Breite ist, so dass eine Mehrzahl von Prüfeinheiten mit der gleichen Breite mit der Fördereinrichtung verbindbar ist.

Erforderlich für die vorliegende Erfindung ist, dass der Förderweg anders als bei Fördereinrichtungen in Form von Drehtellern zumindest einen geraden Abschnitt aufweist, wobei die Prüfposition der Prüfeinheit an diesem geraden Abschnitt angeordnet ist. Durch die Ausführung des Förderweges als zumindest abschnittsweise gerade lässt sich eine Mehrzahl von Prüfeinheiten entlang des geraden Abschnitts des Förderweges anordnen. Je nach Bedarf kann die Länge des geraden Abschnitts auf einfache Weise variiert werden und damit mehr oder weniger Prüfeinheiten dort platziert werden. Demgegenüber erfordert im Stand der Technik eine Veränderung der Prüfstrecke in der Regel einen vollständigen Austausch des Drehtellers durch einen Drehteller mit anderem Radius.

Zudem ist die Prüfstrecke bei einer Fördereinrichtung in Form eines Drehtellers gekrümmt. Dabei wird im Sinne der vorliegenden Erfindung als Prüfstrecke diejenige Strecke bezeichnet, über die hinweg sich das Prüfobjekt bewegt, während es von einem Sensor einer Prüfeinheit erfasst wird.

Daher müssen Fehler, die sich aufgrund der gekrümmten Prüfstrecke ergeben im Stand der Technik aus den Ergebnissen der Messungen herausgerechnet werden. Dies entfällt bei einer linearen bzw. geraden Prüfstrecke.

In einer Ausführungsform der Erfindung ist die Fördereinrichtung derart ausgestaltet, dass die Mehrzahl von Aufnahmen auf einem geschlossenen Bewegungspfad geführt ist, wobei der Förderweg einen Teil des Bewegungspfades einnimmt. Auf diese Weise kann die Fördereinrichtung kontinuierlich arbeiten, da die Aufnahmen nach einem Umlauf immer wieder an ihren Ursprungsort zurückkehren.

In einer Ausführungsform der Erfindung weist der Bewegungspfad der Mehrzahl von Aufnahmen zwei gerade Abschnitte auf wobei zumindest einer der geraden Abschnitte Teil des Förderweges ist. In einer Ausführungsform der Erfindung sind beide geraden Abschnitte Teil des Förderweges. In einer Ausführungsform sind die beiden geraden Abschnitte des Bewegungspfads einander gegenüberliegend angeordnet.

In einer weiteren Ausführungsform weist die Prüfanlage zwei Prüfeinheiten auf, wobei die Prüfeinheiten an zwei Prüfpositionen entlang des Förderweges angeordnet sind, wobei der Förderweg zwei gerade Abschnitte aufweist und wobei eine erste der zwei Prüfpositionen an einem ersten der zwei geraden Abschnitte angeordnet ist und wobei eine zweite der zwei Prüfpositionen an einem zweiten der zwei geraden Abschnitte angeordnet ist. Die Anordnung mit zwei geraden Abschnitten des Förderweges, wobei an jedem der geraden Abschnitte eine Prüfeinheit vorgesehen ist, hat den Vorteil, dass sie platzsparend ist verglichen mit einer Anordnung, bei welcher zwei Prüfeinheiten an einem einzigen geraden und entsprechend verlängerten Abschnitt des Förderweges angeordnet sind.

Es versteht sich, dass in einer Ausführungsform der Erfindung, bei welcher die Fördereinrichtung einen geschlossenen Bewegungspfad mit zwei geraden Abschnitten aufweist, der Bewegungspfad symmetrisch ausgestaltet ist, vorzugsweise spiegelsymmetrisch gegenüber einer Ebene senkrecht zu den geraden Abschnitten des Bewegungspfades und vorzugsweise rotationssymmetrisch mit einer zweizähligen Rotationssymmetrie.

In einer Ausführungsform der Erfindung ist die Mehrzahl von Aufnahmen für die einzelnen Prüfobjekte derart ausgestaltet, dass darin jeweils ein zylindrisches Sicherheitsbauteil aufnehmbar ist. Beispiele für ein solches zylindrisches Sicherheitsbauteil sind eine Schraube, ein Stift oder einen Bolzen.

Für die Ausgestaltung der einzelnen Aufnahmen sind verschiedene Realisierungen möglich. In einer Ausführungsform der Erfindung ist jede Aufnahme in Form eines Magnetnestes ausgestaltet. Dabei dient vorzugsweise ein Permanentmagnet dazu, das jeweilige Prüfobjekt in der Aufnahme zu halten.

In einer Ausführungsform dient die Aufnahme zum Halten oder Aufnehmen eines zylindrischen Sicherheitsbauteils mit einem Kopf.

In einer Ausführungsform weist die Aufnahme eine in einer Ebene liegende Trägerfläche und eine Durchbrechung in der Trägerfläche auf, wobei die Durchbrechung zu einer Seite der Trägerfläche eine Öffnung aufweist, sodass ein einzelnes Prüfobjekt durch die Öffnung in die Durchbrechung einführbar ist. In einer Ausführungsform ist eine solche Aufnahme schlitzartig oder langlochförmig ausgestaltet, wobei der Schlitz an einer Seite der Trägerfläche offen ist, um von dort das Prüfobjekt in die Durchbrechung der Aufnahme einführen zu können.

Insbesondere ist eine solche Ausführungsform einer Aufnahme zum Aufnehmen eines zylindrischen Sicherheitsbauteils mit Kopf geeignet. Der zylindrische Abschnitt des Sicherheitsbauteils wird durch die Öffnung in die Durchbrechung in der Trägerfläche eingeführt. Eine Unterseite des Kopfes des Sicherheitsbauteils liegt auf der Trägerfläche der Aufnahme auf.

Es versteht sich, dass in einer einzigen Trägerfläche eine Mehrzahl von Aufnahmen vorgesehen sein kann.

In einer Ausführungsform der Erfindung weist jede aus der Mehrzahl von Aufnahmen eine in einer Ebene liegende Trägerfläche und eine Durchbrechung in der Trägerfläche auf, wobei die Durchbrechung an einer Seite der Trägerfläche eine Öffnung aufweist, sodass ein Prüfobjekt aus der Mehrzahl von Prüfobjekten durch die Öffnung in die Durchbrechung einführbar ist, wobei die Trägerfläche aus einer ersten Lage in eine zweite Lage bewegbar ist.

Die Möglichkeit, die Trägerfläche aus einer ersten Lage in eine zweite Lage zu bewegen ermöglicht es, je nach Anordnung das Prüfobjekt auf einfache Weise aus der Aufnahme auszustoßen oder eine weniger fehleranfällige Zuführung des jeweiligen Prüfobjekts in die Aufnahme zu ermöglichen.

In einer Ausführungsform der Erfindung ist die erste Lage der Trägerfläche dadurch bestimmt, dass sich die Trägerfläche im Wesentlichen horizontal erstreckt. In dieser ersten Lage der Trägerfläche ist dann das Prüfobjekt stabil in der Aufnahme aufgenommen.

Bewegt man nun die Trägerfläche aus der ersten Lage in eine zweite, nicht horizontale Lage, sodass sich das Prüfobjekt in Richtung der Öffnung bewegt, so wird das Prüfobjekt von der Schwerkraft angetrieben durch die Öffnung hindurch treten und aus der Aufnahme herausfallen.

In einer Ausführungsform der Erfindung ist die Trägerfläche um eine Schwenkachse aus der ersten Lage in die zweite Lage schwenkbar, wobei die Schwenkachse parallel zu einer Bewegungsrichtung der Aufnahme entlang des Förderweges ist.

Darüber hinaus ermöglicht die Bewegbarkeit der Trägerfläche aus der ersten Lage in die zweite Lage in einer Ausführungsform eine Reduzierung der Störanfälligkeit beim Zuführen von Prüfobjekten in die Aufnahmen der Fördereinrichtung.

In einer Ausführungsform der Erfindung ist die Trägerfläche transparent, sodass eine Prüfeinheit das jeweilige Prüfobjekt vollständig von nur einer Seite der Trägerfläche aus erfassen kann.

In einer Ausführungsform der Erfindung weist die Zuführeinrichtung eine Zuführschräge auf, wobei die Zuführschräge derart ausgestaltet und angeordnet ist, dass in einem Betrieb der Prüfanlage die Mehrzahl von Prüfobjekten, vorzugsweise von der Schwerkraft angetrieben, über die Zuführschräge in Richtung der Mehrzahl von Aufnahmen an der Zuführposition rutscht, wobei die Trägerfläche in der zweiten Lage parallel zu einem Übergabeabschnitt der Zuführfläche ist. Auf diese Weise wird ein Anstoßen und Hängenbleiben der Prüfobjekte an einem Höhenversatz zwischen dem Übergabeabschnitt der Zuführschräge und der Trägerfläche vermieden. Dies gilt insbesondere dann, wenn in einer Ausführungsform der Erfindung der Übergabeabschnitt der Zuführschräge höher als die Trägerfläche in ihrer zweiten Lage angeordnet ist. In einer Ausführungsform der Erfindung liegen die Trägerfläche in der zweiten Lage und der Übergabeabschnitt der Zuführschräge in einer Ebene, so dass es keinen Versatz zwischen den beiden Flächen gibt. Auf diese Weise sind die Flächen, auf welchen die Prüfobjekte zum einen auf der Zuführfläche und zum anderen auf der Trägerfläche rutschen, aneinander angeglichen.

In einer Ausführungsform der Erfindung weist die Fördereinrichtung an der Zuführposition eine ortsfeste Betätigungsnocke auf, wobei die Aufnahme und die Betätigungsnocke derart ausgestaltet und angeordnet sind, dass die Betätigungsnocke die Trägerfläche aus der ersten Lage in die zweite Lage bewegt, wenn die Aufnahme die Zuführposition erreicht.

Durch den Eingriff zwischen der Aufnahme und der Betätigungsnocke kann auf einfache Weise eine Zwangsführung der Aufnahme mit der Trägerfläche bereitgestellt werden, um die Bewegung der Trägerfläche aus der ersten Lage in die zweite Lage zu bewirken.

In einer Ausführungsform der Erfindung umfasst die Fördereinrichtung eine Führungsschiene und eine Mehrzahl von an den Führungsschienen geführten Laufwagen, wobei jeder der Laufwagen mindestens eine Aufnahme aus der Mehrzahl von Aufnahmen trägt. Eine solche Realisierung der Fördereinrichtung mit einer oder mehreren Führungsschienen und einer Mehrzahl von an den Führungsschienen geführten Laufwagen ermöglicht es, die Länge der Fördereinrichtung variabel auszugestalten. Zudem sind die Laufwagen mit den Aufnahmen präzise und reproduzierbar an der Führungsschiene geführt.

Während in einer Ausführungsform ein einziger Laufwagen genau eine Aufnahme für genau ein Prüfobjekt aufweist, hat in einer anderen Ausführungsform ein Laufwagen eine Mehrzahl von Aufnahmen, die jeweils genau ein Prüfobjekt aufnehmen.

Gemäß der Erfindung weist die Prüfeinheit ein Gehäuse mit einem vorgegebenen Bauraum auf, wobei das Gehäuse lösbar mit der Fördereinrichtung verbindbar ist, sodass die Prüfeinheit durch eine andere Prüfeinheit austauschbar ist. Insbesondere ist das Gehäuse der Prüfeinheit in einer Ausführungsform in oder an einem Prüfplatz der Prüfanlage an der Fördereinrichtung austauschbar aufnehmbar.

Zudem weist das Gehäuse eine vorgegebene Breite auf, wobei der gerade Abschnitt des Förderweges ein ganzzahliges Vielfaches der Breite ist, sodass eine Mehrzahl von Prüfeinheiten mit der gleichen Breite mit der Fördereinrichtung verbindbar ist.

Auf diese Weise kann die Prüfanlage modular aufgebaut werden, wobei je nach Anwendung eine oder mehrere Prüfeinheiten mit ihren Gehäusen mit der Fördereinrichtung verbunden werden können und wobei ein Austausch der einzelnen Prüfeinheiten möglich ist.

In einer Ausführungsform der Erfindung umfasst die Prüfeinheit mindestens einen Sensor, wobei der Sensor derart angeordnet ist, dass er an der Prüfposition eine Eigenschaft der Mehrzahl von Prüfobjekten erfasst. In einer Ausführungsform der Erfindung ist der Sensor ausgewählt ist aus einer Gruppe bestehend aus einem Wirbelstromsensor, einem Tastkopf, einem Leitfähigkeitssensor und einer Kamera oder einer Kombination davon.

In einer Ausführungsform der Erfindung ist die Prüfeinheit derart ausgestaltet, dass sie eine Prüfung des Prüfobjekts ausführt, die ausgewählt ist aus einer Gruppe bestehend aus
- einer Rissprüfung, beispielsweise einer Prüfung auf Risse, welche durch den Pressprozess über die gesamte Kontur der Schraube an Rotationsebenen entstehen,
- einer Gefügeprüfung, beispielsweise einer Prüfung auf Fehler in der Materialzusammensetzung, auf den Einschluss von Fremdmaterial oder auf Lufteinschlüsse oder eine Unterscheidung von gehärteten und ungehärteten Teilen,
- einer Innen-/Außenkonturprüfung, insbesondere des Kopf eines zylindrischen Sicherheitsbauteils, beispielsweise durch mechanische Prüfung auf Verschraubbarkeit und Eindringtiefe oder durch Auswertung der über ein Kamerasystem,
- einer mechanischen Prüfung auf Rundheit, insbesondere eines Kopfes eines zylindrischen Sicherheitsbauteils,
- einer Prüfung auf Pressfehler mittels eines Konturtasters,
- einer Geradheitsprüfung, beispielsweise der Prüfung der Geradheit des Schafts eines zylindrischen Sicherheitsbauteils anhand einer Messung in drei Ebenen,
- einer automatisierten Sichtprüfung mit einer Kamera, beispielsweise auf den Kopf eines zylindrischen Sicherheitsbauteils von oben, auf den Kopf eines zylindrischen Sicherheitsbauteils von unten, insbesondere zur Kontrolle einer Dichtfläche auf Verunreinigungen und Schlagstellen, auf den Kopf eines zylindrischen Sicherheitsbauteils von der Seite, insbesondere zur Kontrolle der Maße des Kopfes, oder seitlich auf den Schaft, insbesondere zur Kontrolle der Maße des Schafts,
- einer optischen Prüfung auf das Vorhandensein/Fehlen von Konturen, Beschriftungen, Beschichtungen und Verunreinigungen, Schlagstellen,
- einer optischen Prüfung der Maße verschiedener Konturen des Prüfobjekts,
- einer automatisierten rundum Sichtprüfung mit einer Kamera (360° Kameraprüfung),
- einer Beschichtungsprüfung, beispielsweise der Prüfung einer Klebebeschichtung
oder einer Kombination davon.

Derartige Messverfahren sind geeignet, die Qualität der Eigenschaften eines Prüfobjekts, insbesondere eines Prüfobjektes aus Metall, quantitativ zu erfassen.

In einer Ausführungsform der Erfindung weist die Prüfanlage zusätzlich zu der mindestens einen Prüfeinheit eine Verarbeitungseinrichtung zum weiteren Verarbeiten oder Bearbeiten des Prüfobjekts auf. Beispiele für eine derartige Verarbeitungseinrichtung sind
- eine Montageeinrichtung, beispielsweise zum Ein- oder Aufpressen oder Ein- oder Aufdrehen von zusätzlichen Bauteilen auf das Prüfobjekt, insbesondere mit einer gleichzeitigen Drehmoment- und Positionskontrolle und
- eine Beschichtungseinrichtung, beispielsweise zum Aufbringen einer Beschichtung, insbesondere eines Gleitmittels oder einer Schutzbeschichtung auf ein zylindrisches Sicherheitsbauteil.

In einer Ausführungsform der vorliegenden Erfindung umfasst die Fördereinrichtung mindestens eine Führungsschiene und eine Mehrzahl von an der mindestens einen Führungsschiene geführten Laufwagen, wobei jeder aus der Mehrzahl von Laufwagen mindestens eine aus der Mehrzahl von Aufnahmen trägt.

Die Ausführung der Fördereinrichtung mit einem System aus Führungsschiene und einer Mehrzahl von an der Führungsschiene geführten Laufwagen ermöglicht es, die Länge des Förderweges auf einfache Weise zu variieren. So kann die Führungsschiene durch Hinzufügen von weiteren Segmenten verlängert oder durch Herausnehmen von Segmenten verkürzt werden, wobei dann die Anzahl der Laufwagen, die an der Führungsschienen aufgenommen sind, ebenfalls variiert wird.

In einer weiteren Ausführungsform weist die Fördereinrichtung eine Mehrzahl von Segmenten auf, wobei der gerade Abschnitt des Förderweges ein ganzzahliges Vielfaches von Segmenten aufweist. Bei einer derartigen Ausgestaltung lässt sich der gerade Abschnitt in seiner Länge flexibel an die Prüfaufgabe anpassen, insbesondere lassen sich verschiedene Anzahlen von Prüfeinheiten an dem geraden Abschnitt unterbringen.

In einer Ausführungsform der Erfindung, ist die Mehrzahl von Aufnahmen auf einem geschlossenen Bewegungspfad geführt, wobei der Bewegungspfad zwei gerade Abschnitte und zwei gekrümmte Abschnitte, welche jeweils eine Umlenkung um 180° bereitstellen, aufweist. Eine solche Ausführungsform weist den Vorteil auf, dass für jede Anlage zwei Segmente mit gekrümmten Abschnitte des Bewegungspfades bereitgestellt werden müssen und eine flexible Anzahl von Segmenten mit jeweils zwei geraden Abschnitten des Bewegungspfades je nach dem, für welche Prüfaufgabe die Prüfanlage gedacht ist.

In einer Ausführungsform der Erfindung weist die Prüfanlage weiterhin einen Prüfplatz an der Prüfposition der Prüfanlage, eine Datenübertragungseinrichtung, eine erste Datenschnittstelle und eine Kennung auf, wobei die Prüfeinheit umfasst eine Prüfsteuerung mit einer Ausleseeinrichtung und eine mit der Prüfsteuerung verbundenen zweite Datenschnittstelle, wobei der Prüfplatz derart ausgestaltet ist, dass die Prüfeinheit austauschbar mit dem Prüfplatz verbunden ist, wobei die zweite Datenschnittstelle zum Datenaustausch trennbar mit der ersten Datenschnittstelle der Prüfanlage verbunden ist, wobei die Datenübertragungseinrichtung zur Informationsübertragung wirksam zumindest mit der Ausstoßeinrichtung und über die ersten Datenschnittstelle und die zweite Datenschnittstelle mit der Prüfeinheit verbunden ist, wobei die Kennung die Prüfposition eineindeutig identifiziert, wobei die Kennung derart kodiert ist, dass die Kennung bei einem Einfügen der Prüfeinheit in den Prüfplatz von der Prüfeinheit auslesbar ist, wobei die Ausleseeinrichtung derart eingerichtet ist, dass in dem Betrieb der Prüfanlage mit der Ausleseeinrichtung die Kennung auslesbar ist, und wobei die Prüfsteuerung derart eingerichtet ist, dass die Prüfsteuerung bei einem Einfügen der Prüfeinheit in den Prüfplatz die Kennung mittels der Ausleseeinrichtung ausliest.

Die Grundidee dieser Ausführungsform der vorliegenden Erfindung ist es, die Prüfeinheiten in Form austauschbarer Module bereitzustellen und die dafür erforderliche Struktur für die Datenverarbeitung vorzusehen. Die jeweilige Prüfeinheit ist an dem Prüfplatz in die Prüfanlage austauschbar einfügbar. Auf diese Weise kann eine Prüfeinheit mit einer ersten Funktionalität gegen eine Prüfeinheit mit einer zweiten Funktionalität ausgetauscht werden. Die die gleiche Prüfanlagekann dann für unterschiedliche Prüfaufgaben eingesetzt werden. Die erfindungsgemäße Lösung ermöglicht es auch, in eine Prüfanlage eine Mehrzahl von Prüfplätzen an eine Mehrzahl von Prüfpositionen vorzusehen. Durch den Austausch einer oder mehrerer aus der Mehrzahl von Prüfeinheiten bzw. durch Ändern einer Reihenfolge der Mehrzahl von Prüfeinheiten ist es dann möglich frei gestaltbare Prüfabfolgen in ein und derselben Prüfanlage zu implementieren.

Gemäß dieser Ausführungsform liest eine Prüfeinheit beim Einfügen in einen Prüfplatz der Prüfanlage die Kennung, welche die Prüfposition eineindeutig identifiziert, aus. Vorzugsweise geschieht dies automatisch, wobei der Ausleseprozess nicht gesondert von einem Bediener ausgelöst werden muss. Die Prüfeinheit hat nach dem Auslesen der Kennung Kenntnis darüber in welchem Prüfplatz und damit an welcher Prüfposition der vorhandenen Prüfanlage sie angeordnet ist. Dies ist der Schlüssel für eine Reihe von möglichen Ausgestaltungen einer flexiblen Prüfanlage.

In einer Ausführungsform der Erfindung umfasst die Prüfanlage eine Mehrzahl von Prüfplätzen an einer Mehrzahl von Prüfpositionen an dem Förderweg in der Förderrichtung hinter der Zuführposition. In einer solchen Ausführungsform weist die Prüfanlage eine Mehrzahl von Kennungen auf, welche jeweils genau eine Prüfposition eines Prüfplatzes eineindeutig identifizieren, wobei jede Kennung derart kodiert ist, dass die jeweilige Kennung beim Einfügen einer Prüfeinheit in den jeweiligen Prüfplatz automatisch von der Prüfeinheit auslesbar ist.

In einer Ausführungsform der Erfindung umfasst die Prüfanlage eine Mehrzahl von Zuführeinrichtungen an einer Mehrzahl von Zuführpositionen. Auf diese Weise ist es möglich der gleichen Prüfstrecke unterschiedliche Typen oder von Prüfobjekten zuzuführen. Insbesondere können neben den eigentlichen Prüfobjekten aus der laufenden Produktion zu definierbaren Zeitpunkten fehlerbehaftete Teile zugeführt werden, um die Anlage einer Toleranzmessung oder Testung zu unterziehen. Auch ermöglicht eine Mehrzahl von Zuführeinrichtungen in einer Ausführungsform die Realisierung einer Mehrzahl von Prüfstrecken in der gleichen Prüfanlage mit nur einer Fördereinrichtung.

In einer Ausführungsform der Erfindung umfasst die Prüfanlage eine Mehrzahl von Ausstoßeinrichtungen an einer Mehrzahl von Ausstoßpositionen. Durch eine Mehrzahl von Ausstoßeinrichtungen ist es möglich anhand des Prüfergebnisses eine Sortierung der Prüfobjekte beim Ausstoßen aus der Prüfanlage vorzunehmen.

In einer Ausführungsform der Erfindung ist die Kennung in einer an dem Prüfplatz angeordneten und von der Prüfeinheit auslesbaren Kennungseinrichtung kodiert.

Ein mögliches Beispiel für eine solche Kennungseinrichtung ist ein RFID-Chip, welcher mit einem RFID-Leser der Prüfeinheit auslesbar ist, oder ein QR-Code, welcher mit einem QR-Codeleser der Prüfeinheit auslesbar ist.

In einer Ausführungsform der Erfindung ist die Kennungseinrichtung von einem Steckverbinder gebildet, der an dem Prüfplatz angeordnet ist. In einer Ausführungsform weist dabei der Steckverbinder vorzugsweise eine Mehrzahl von Kontaktstiften oder Kontaktbuchsen auf, wobei die Anordnung der vorhandenen und/oder mit einer Anschlussleitung verbundenen Kontaktstifte oder Kontaktbuchsen die Kennung kodiert.

Beispielsweise hat in einer Ausführungsform der Steckverbinder eine Anordnung von n x m Kontaktbuchsen, wobei n und m ganze Zahlen bezeichnen. Dabei ist aber nur ein charakteristisches Muster dieser n x m Buchsen mit einer Anschlussleitung versehen ist. So kann durch Erfassen, welche Kontaktbuchsen kontaktiert sind, die Prüfeinheit identifizieren, welches Belegungsmuster die Kontakte des Steckverbinders zeigen und so eindeutig erkennen an welchem Prüfplatz die Prüfeinheit aufgenommen ist.

Eine Möglichkeit, die Kennung für die Prüfposition zu kodierenden, besteht darin, Elemente der ersten Datenschnittstelle, zur Kodierung der Kennung zu verwenden.

Es versteht sich daher, dass ein solcher an dem Prüfplatz angeordneter Steckverbinder in einer Ausführungsform gleichzeitig auch einen Bestandteil der ersten Datenschnittstelle bildet. Über diesen Steckverbinder der ersten Datenschnittstelle werden dann Daten von der Prüfanlage an die Prüfeinheit und umgekehrt übergeben werden. Daher umfasst in einer Ausführungsform die erste Datenschnittstelle einen an dem Prüfplatz angeordneten Steckverbinder, wobei der Steckverbinder der ersten Datenschnittstelle mit einem dazu komplementären Steckverbinder der Prüfeinheit verbindbar ist.

In einer weiteren Ausführungsform ist die Datenübertragungseinrichtung ein TCP/IP-Datennetzwerk. In einer Ausführungsform umfasst dabei die erste Datenschnittstelle einen Switch mit einer eineindeutigen IP-Adresse oder mit einer Mehrzahl von Ports mit jeweils einer eineindeutigen IP-Adresse. Ein solcher Switch ist in einer Ausführungsform genau einem Prüfplatz zugeordnet, so dass seine IP-Adresse die Kennung der Prüfposition dieses Prüfplatzes bildet. In einer alternativen Ausführungsform ist jeweils ein Port eines Switches mit einer eigenen IP-Adresse genau einem Prüfplatz zugeordnet. Es versteht sich, dass in einer Ausführungsform mit einer Mehrzahl von Prüfplätzen jedem Prüfplatz genau ein Switch oder genau ein Port eines Switches mit einer eineindeutigen IP-Adresse zugeordnet ist. Verbindet man die Prüfeinheit in einer solchen Ausführungsform mit einem solchen Switch, so liest die Prüfeinheit die IP-Adresse aus und erhält damit Kenntnis über die Prüfposition des Prüfplatzes, in den sie eingefügt wurde.

In einer Ausführungsform der Erfindung ist somit die Kennung als IP-Adresse der ersten Datenschnittstelle kodiert.

In einer Ausführungsform der Erfindung ist die erste Datenschnittstelle eine drahtlose Schnittstelle, beispielsweise eine WLAN- oder Bluetooth-Schnittstelle. Da in einer solchen Ausführungsform möglicherweise kein Steckverbinder an dem jeweiligen Prüfplatz vorgesehen ist, ist in einer solchen Ausführungsform die Kennung beispielsweise in einem RFID-Chip oder einem QR-Code an dem Prüfplatz kodiert.

Eine Datenübertragungseinrichtung im Sinne der vorliegenden Anmeldung umfasst jedes zur Datenübertragung zwischen den mit der Datenübertragungseinrichtung verbundenen Elementen der Prüfanlage geeignete System, welches es ermöglicht Daten bzw. Informationen zwischen den an die Datenübertragungseinrichtung angeschlossenen Elementen auszutauschen. Beispiele für eine solche Datenübertragungseinrichtung sind ein BUS und ein IP-basiertes Datennetzwerk.

Die Datenübertragungseinrichtung der erfindungsgemäßen Prüfanlage ist zumindest mit der Ausstoßeinrichtung und der ersten Datenschnittstelle verbunden, sodass es in dieser Minimalkonfiguration möglich ist, einen Ausstoßbefehl von der Prüfeinheit, welche mit der ersten Datenschnittstelle verbindbar ist, an die Ausstoßeinrichtung zu übermitteln.

In einer weiteren Ausführungsform sind nicht nur eine oder mehrere Prüfeinheiten austauschbar und frei konfigurierbar an den Prüfplätzen aufnehmbar, sondern das gleiche modulare Konzept ist auch für die Ausstoßeinrichtung und/oder die Zuführeinrichtung realisiert.

Daher weist die Prüfanlage in einer Ausführungsform ferner einen Ausstoßplatz und eine Kennung, die die Ausstoßposition eineindeutig identifiziert, auf. Dabei ist der Ausstoßplatz derart ausgestaltet, dass die Ausstoßeinrichtung austauschbar in den Ausstoßplatz eingefügt ist, wobei an dem Ausstoßplatz eine erste Datenschnittstelle vorgesehen ist, die mit einer zweiten Datenschnittstelle der Ausstoßeinrichtung verbunden ist, wobei die Datenübertragungseinrichtung zur Informationsübertragung wirksam über die erste Datenschnittstelle und die zweite Datenschnittstelle mit der Ausstoßeinrichtung verbunden ist, wobei die Kennung derart kodiert ist, dass die Kennung bei einem Einfügen der Ausstoßeinrichtung in den Ausstoßplatz von der Ausstoßeinrichtung auslesbar ist und wobei die Ausstoßeinrichtung eine Leseeinrichtung zum Auslesen der Kennung aufweist.

Es versteht sich, dass die ersten und zweiten Datenschnittstellen, die Kennung sowie die Ausleserichtung für den Ausstoßplatz bzw. die Ausstoßeinrichtung so ausgestaltet sein können, sowie wie es zuvor für den Prüfplatz und die Prüfeinheit beschrieben wurde.

In einer Ausführungsform der Erfindung umfasst die Prüfanlage eine mit der Datenübertragungseinrichtung verbundenen Anlagensteuerung. In einer Ausführungsform ist die Anlagensteuerung ein Rechner.

Eine solche Anlagensteuerung übernimmt in einer Ausführungsform ausschließlich administrative Aufgaben zum Betrieb der Prüfanlage, nicht aber die Steuerung der Prüfung und der nachfolgenden Sortierung der Prüfobjekte. In einer Ausführungsform der Erfindung ist die Anlagensteuerung derart ausgestaltet, dass sie keine Ausstoßbefehle erzeugt, mit der ein Ausstoß eines Prüfobjekts an der Ausstoßeinrichtung auslösbar wäre.

In einer Ausführungsform der Erfindung übernimmt die Anlagensteuerung die Steuerung der Fördereinrichtung, beispielsweise das Einstellen oder Regeln der Geschwindigkeit, mit welcher die Mehrzahl von Prüfobjekten auf dem Förderweg bewegt werden.

In einer weiteren Ausführungsform der Erfindung dient die Anlagensteuerung der Erfassung und/oder dem Sammeln von Fehlermeldungen der einzelnen Einrichtungen der Prüfanlage und/oder der Signalisierung solcher Fehler an einen Bediener.

Eine in einen Prüfplatz einer Prüfanlage einfügbare Prüfeinheit ist in einer Ausführungsform wie folgt ausgestaltet. Die Prüfeinheit weist eine Prüfsteuerung und eine mit der Prüfsteuerung verbundene zweite Datenschnittstelle auf, wobei die zweite Datenschnittstelle zum Datenaustausch mit einer ersten Datenschnittstelle der Prüfanlage verbindbar ist, wobei die Prüfsteuerung eine Ausleseeinrichtung umfasst, wobei die Ausleseeinrichtung derart eingerichtet ist, dass sie in dem Betrieb der Prüfanlage eine Kennung, welche eine Prüfposition des Prüfplatzes der Prüfanlage eineindeutig identifiziert, ausliest und wobei die Prüfsteuerung derart eingerichtet ist, dass die Prüfsteuerung bei einem Einfügen der Prüfeinheit in den Prüfplatz die Kennung ausliest. Dabei kann die Prüfeinheit alle hierin optional beschriebenen Merkmale umfassen, auch wenn sie in Kombination nur mit der Prüfanlage dargestellt werden.

In einer Ausführungsform der Erfindung ist die Prüfsteuerung derart eingerichtet, dass sie die Kennung automatisch, d.h. ohne gesondertes Anstoßen des Ausleseprozesses durch einen Bediener, ausliest. Das Auslesen wird insbesondere automatisiert beim Einfügen der Prüfeinheit in den Prüfplatz angestoßen.

In einer Ausführungsform der Erfindung umfasst die Ausleseeinrichtung neben logischen, beispielsweise als Software implementierten Elementen auch Hardwareelemente, wie z.B. einen RFID-Leser oder einem zu dem Steckverbinder der Prüfanlage komplementären Steckverbinder, welcher über Leitungen mit dem Rest der Prüfsteuerung verbunden ist.

In einer Ausführungsform ist die Prüfsteuerung ein Rechner. Entscheidend ist, dass die Prüfsteuerung eine von der Anlagensteuerung separate Einheit ist, welche bei einem Entfernen der Prüfeinheit aus dem Prüfplatz in der Prüfeinheit verbleibt.

In einer Ausführungsform der Erfindung ist die Prüfsteuerung derart eingerichtet, dass die Prüfsteuerung in dem Betrieb der Prüfanlage unter Verwendung der in der Kennung kodierten Prüfposition eine Dauer berechnet, die ein Prüfobjekt von eine Erfassung durch die Prüfeinheit an der Prüfposition bis zu dem Erreichen der Ausstoßposition benötigt, und die Prüfsteuerung in dem Betrieb der Prüfanlage einen Ausstoßbefehl für die Ausstoßeinrichtung gibt und über die erste und die zweite Datenschnittstelle und über die Datenübertragungseinrichtung an die Ausstoßeinrichtung sendet, sodass ein von der Prüfeinheit erfasstes Prüfobjekt von der Ausstoßeinrichtung ausgestoßen wird, wenn es dieses erreicht.

Diese erfindungsgemäße Ausgestaltung der Prüfsteuerung der Prüfeinheit ermöglicht es, die gesamte Prüfaufgabe von der Erfassung des jeweiligen Prüfobjekts bis hin zum Ausstoßen des Prüfobjekts an der dazu vorgesehenen Stelle von der Prüfsteuerung, welche in die Prüfeinheit integriert ist, auszuführen. Die Anlagensteuerung selbst, soweit sie überhaupt erforderlich ist, übernimmt dann nur koordinierende und verwaltende Aufgaben.

Dabei ist die Dauer, die ein Prüfobjekt von einer Erfassung durch die Prüfeinheit an der Prüfposition bis zu dem Erreichen der Ausstoßposition benötigt, in einer Ausführungsform beschrieben durch ein ganzzahliges Vielfaches eines Bearbeitungstakts der Prüfanlage. In einer Ausführungsform ist ein solcher Bearbeitungstakt definiert als der Vorschub der Fördereinrichtung um genau ein in der Fördereinrichtung aufgenommenes Prüfobjekt oder um genau eine Aufnahme der Fördereinrichtung für ein Prüfobjekt. Auf diese Weise ist die Dauer, die ein Prüfobjekt von einer Erfassung durch die Prüfeinheit an der Prüfposition bis zu dem Erreichen der Ausstoßposition benötigt, für die Prüfsteuerung berechenbar, selbst wenn es zu Unterbrechungen bei der Förderung der Prüfanlage kommt.

Eine in einen Prüfplatz eingefügte Prüfeinheit hat anhand der eineindeutigen Kennung des Prüfplatzes eine Information darüber, wo sie sich in der jeweiligen Prüfanlage befindet. Sie trifft eine Entscheidung darüber, an welcher Ausstoßposition ein geprüftes Prüfobjekt auszustoßen ist und übermittelt den Ausstoßbefehl unmittelbar an die jeweilige Ausstoßeinrichtung, ohne dass dafür die Anlagensteuerung notwendig wäre.

In einer Ausführungsform der Erfindung ist folgendes Szenario denkbar. Eine Prüfanlage mit einer vorgegebenen Anzahl von Prüfplätzen, einer Zuführeinrichtung und einer vorgegebenen Anzahl von Ausstoßeinrichtungen wird aufgebaut. Diese Grundkonfiguration wird jeder Prüfeinheit, welche mit dieser Prüfanlage eingesetzt werden soll hinterlegt. Beim Einfügen einer derart vorkonfigurierten Prüfeinheit hat die Prüfeinheit dann aufgrund des Auslesens der Kennung des jeweiligen Prüfplatzes Kenntnis darüber, an welcher Prüfposition der jeweiligen Prüfanlage sie eingefügt ist, und kann sämtliche Prüfaufgaben selbstständig übernehmen.

Beispielsweise ist in der Prüfeinheit vorab hinterlegt, dass es zwei Ausstoßeinrichtungen an zwei verschiedenen Ausstoßpositionen gibt, eine Ausstoßeinrichtung für fehlerhafte Prüfobjekte und eine Ausstoßeinrichtung für Prüfobjekte, welche die Prüfung erfolgreich durchlaufen haben. Nach dem Erfassen eines Prüfobjekts sorgt die Prüfsteuerung der Prüfeinheit ohne Hinzuziehung einer Anlagensteuerung dafür, dass das jeweilige Prüfobjekt an der richtigen Ausstoßposition ausgestoßen wird.

In einer Ausführungsform der Erfindung ist die Anlagensteuerung derart eingerichtet, dass sie in dem Betrieb der Einrichtung mindestens einen Betriebsparameter der Prüfanlage an die Prüfsteuerung der Prüfeinheit übermittelt. Auf diese Weise kann in einer Ausführungsform eine Vorkonfiguration der Prüfeinheiten entfallen.

In einer Ausführungsform umfasst der übermittelte Betriebsparameter eine Beschreibung der Konfiguration der Prüfanlage. In einer Ausführungsform der Erfindung umfasst der Betriebsparameter eine oder mehrere Ausstoßpositionen.

In einer Ausführungsform kann die Prüfeinheit dann nach dem Auslesen der Kennung der Prüfposition des Prüfplatzes, in den sie eingefügt wurde selbstständig alle Informationen ableiten, die sie für die Steuerung des Ausstoßens der jeweiligen Prüfobjekte benötigt.

In einer Ausführungsform der Erfindung wird ein von der Prüfanlage an die Prüfsteuerung übermittelter Betriebsparameter für die Berechnung der Dauer verwendet, die ein Prüfobjekt von einer Erfassung durch die Prüfeinheit an der Prüfposition bis zu dem Erreichen der Ausstoßposition benötigt.

Ein weiteres Beispiel für einen Betriebsparameter im Sinne der vorliegenden Anmeldung ist die Fördergeschwindigkeit der Fördereinrichtung.

In einer Ausführungsform der Erfindung ist die Prüfsteuerung derart ausgestaltet, dass sie eine Mehrzahl von Vorkonfigurationen abspeichert, sodass eine einzige Prüfeinheit in einer Mehrzahl von Prüfanlagen flexibel verwendet werden kann. Ein Bediener kann dann beim Einfügen der Prüfeinheit in die Prüfanlage eine Vorkonfiguration auswählen oder die Vorkonfiguration wird automatisiert ausgewählt.

In einer Ausführungsform der Erfindung umfasst die Kennung zusätzlich eine eineindeutige Information über die jeweilige Prüfanlage und/oder über die Konfiguration der Prüfanlage und/oder über die Ausstoßpositionen der Prüfanlage.

In einer Ausführungsform der Erfindung umfasst die Kombination aus einer Prüfanlage mehrere Prüfplätze an der eine Mehrzahl von Prüfeinheiten aufgenommen ist.

Dabei sind in einer Ausführungsform die Prüfsteuerungen der Mehrzahl von Prüfeinheiten derart ausgestaltet, dass die Prüfeinheiten auch untereinander Daten austauschen können. Auf diese Weise ist es möglich, die Effizienz und die Sicherheit der Prüfanlage mit einer Mehrzahl von Prüfeinheiten zu erhöhen.

In einer Ausführungsform der Erfindung signalisiert eine in der Förderrichtung der Fördereinrichtung erste Prüfeinheit an eine in der Förderrichtung zweite Prüfeinheit, wenn die erste Prüfeinheit ein fehlerhaftes Prüfobjekt erfasst hat, so dass die zweite Prüfeinheit dieses Teil gar nicht mehr prüft. In einer weiteren Ausführungsform signalisiert die erste Prüfeinheit an die zweite Prüfeinheit, wenn sie ein Prüfobjekt mit einem Übermaß erfasst hat. Die zweite Prüfeinheit zieht dann beispielsweise einen Tastkopf zurück oder trifft eine sonstige Maßnahme, um eine Beschädigung der zweiten Prüfeinheit zu vermeiden.

In einer Ausführungsform der Erfindung ist die Prüfsteuerung der Prüfeinheit derart ausgestaltet, dass sie eine vorausgewählte Anzahl von Prüfobjekten an einer vordefinierten Ausstoßposition ausstößt, sodass diese einer gesonderten Toleranzmessung unterzogen werden.

In einer Ausführungsform ist die Prüfsteuerung derart ausgestaltet, dass sie auch die Zuführeinrichtung steuert. In einer Ausführungsform der Erfindung umfasst die Prüfanlage zwei Zuführeinrichtungen an zwei Zuführpositionen. Dabei ist die Prüfsteuerung derart ausgestaltet, dass die Zuführpositionen in regelmäßigen oder zufälligen Zeitintervallen Referenzteile in die Prüfanlage einschleust. Diese Referenzteile werden nach der Erfassung durch die Prüfeinheit immer an der gleichen Ausstoßposition aus der Prüfanlage ausgestoßen, um sie zu einem späteren Zeitpunkt erneut der Anlage zuführen zu können.

In einer Ausführungsform der Erfindung ist die Prüfsteuerung der Prüfeinheit derart ausgestaltet, dass sie eine vorausgewählte Anzahl von Prüfobjekten an einer vordefinierten Ausstoßposition ausstößt, um diese dort ausgestoßenen Prüfobjekte einer Stichprobenmessung zu unterziehen.

In einer Ausführungsform der Erfindung ist die Prüfanlage derart ausgestaltet, dass sie einen getakteten Vorschub der Fördereinrichtung bereitstellt. Der Vorschub der Fördereinrichtung erfolgt in einer solchen Ausführungsform intermittierend, wobei die Dauer der Unterbrechungen bei dem Vorschub beispielswiese davon abhängt, wie lange ein Verarbeitungsschritt in einer Verarbeitungseinrichtung dauert oder auch wieviel Zeit benötigt wird, um eine Prüfung in einer Prüfeinheit abzuschließen. Insbesondere ist es möglich die Prüfanlage so auszugestalten, dass sie Arbeitstakte variabler Länge ermöglicht.

Während in einer Ausführungsform der Erfindung der Abstand zwischen den einzelnen Aufnahmen fest vorgegeben ist, kann die Belegung der Aufnahmen variiert werden. Insbesondere kann die Zuführeinrichtung derart gesteuert werden, dass nur jede x-te Aufnahme mit einem Prüfobjekt belegt wird. Auf diese Weise kann die Prüfanlage an verschiedene Dimensionen von Prüfobjekten durch ihre Steuerung angepasst werden.

In einer Ausführungsform wird die Belegung der Aufnahmen als Grundkonfiguration der Prüfanlage in der Prüfsteuerung hinterlegt.

In einer weiteren Ausführungsform wird die Belegung der Aufnahmen als Betriebsparameter von der Analgensteuerung an die jeweilige Prüfsteuerung übergeben.

In einer weiteren Ausführungsform weist die Prüfeinheit eine mit der Prüfsteuerung verbundene Erfassungseinrichtung zum Erfassen einer ausgezeichneten Position an einem jeden Laufwagen der Fördereinrichtung auf. Dabei ist die ausgezeichnete Position an dem jeweiligen Laufwagen beispielweise dessen Beginn. Die Erfassungseinrichtung ist in einer Ausführungsform eine Lichtschranke. Eine solche Ausführungsform ermöglicht es, den Arbeitstakt der Prüfanlage mittels der Prüfsteuerung zu bestimmen oder zu Kalibrieren. Der Arbeitstakt, der der weiteren Steuerung der Prüfanlage, insbesondere den Ausstoßbefehlen, dann zugrunde liegt, ist unabhängig von einem etwaigen mechanischen Spiel der Fördereinrichtung. Erfasst die Erfassungseinrichtung beispielsweise den Beginn eines Laufwagens, so hat sie Kenntnis darüber, dass die Fördereinrichtung seit dem zuvor erfassten Laufwagen einen Vorschub um eine Anzahl von Arbeitstakten erfahren hat, die gleich der Anzahl von Aufnahmen für die Prüfobjekte auf den Laufwagen ist.

Weitere Vorteile, Merkmale und Anwendungsmöglichkeiten der vorliegenden Erfindung werden anhand der folgenden Beschreibung einer Ausführungsform und der dazu gehörigen Figuren deutlich. In den Figuren sind gleiche Elemente mit gleichen Bezugszeichen bezeichnet.
- Figur 1: ist eine teilweise weggebrochene isometrischen Ansicht einer Prüfanlage gemäß einer Ausführungsform der vorliegenden Erfindung.
- Figur 2: ist eine isometrischen Ansicht der Fördereinrichtung aus der Prüfanlage aus Figur 1.
- Figur 3: ist eine vergrößerte, weggebrochene Ansicht der Förderereinrichtung aus Figur 2.
- Figur 4: ist eine isometrischen Ansicht eines Rollwagens der Fördereinrichtung aus den Figuren 2 und 3.
- Figur 5: ist eine Seitenansicht des Rollwagens aus Figur 4 mit der Zuführeinrichtung.
- Figur 6: ist eine isometrischen Ansicht einer Prüfanlage gemäß einer Ausführungsform der vorliegenden Erfindung.
- Figur 7: ist eine isometrischen Ansicht einer Prüfanlage gemäß einer weiteren Ausführungsform der vorliegenden Erfindung.
- Figur 8: ist eine schematische Draufsicht auf ein die Prüfanlage der Figuren 1 bis 5 beschreibendes Blockschaltbild.

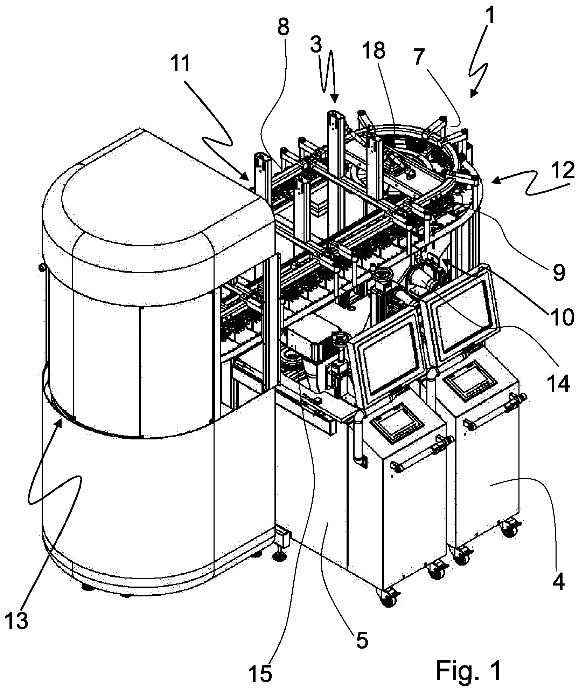

Anhand eines Beispiels wird nun eine Realisierung der erfindungsgemäßen Prüfanlage beschrieben. Figur 1 zeigt eine isometrischen Ansicht der gesamten Prüfanlage. Für die Beschreibung des Betriebs der Anlage wird immer wieder auf diese Figur zurückgegriffen.

Die Prüfanlage 1 dient der Prüfung einer Mehrzahl von Schrauben als Prüfobjekten im Sinne der vorliegenden Anmeldung. Schrauben werden als Schüttgut angeliefert und über eine Zuführeinrichtung 2 der Prüfung zugeführt. Neben der Zuführeinrichtung 2 verfügt die Prüfanlage 1 über eine Fördereinrichtung 3, eine Ausstoßeinrichtung (in der Figur nicht dargestellt) und zwei Prüfeinheiten 4, 5.

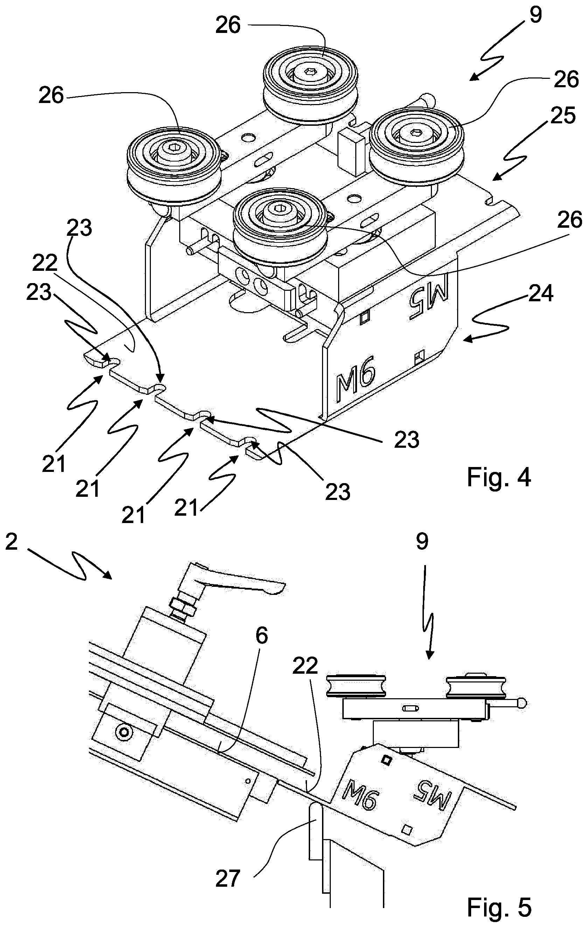

In der dargestellten Ausführungsform ist die Zuführeinrichtung 2 von der Schwerkraft angetrieben, d.h. die einzelnen Schrauben rutschen aufgrund ihrer Masse über eine Zuführschräge 6 in Richtung der Fördereinrichtung 3. Dies ist in der Seitenansicht aus Figur 5 dargestellt. In der Zuführeinrichtung 2 sind die Schrauben bereits aufgereiht, jedoch immer noch in unmittelbarem Kontakt miteinander, sodass sie noch nicht vereinzelt sind. Die Schrauben hängen mit ihrem Kopf bzw. der Fläche auf der Unterseite des Schraubenkopfes auf der Zuführschräge 6. Die Fördereinrichtung 3 greift immer genau eine Schraube aus der Zuführeinrichtung 2 und fördert sie mit einem Abstand zu der vorhergehenden Schraube und zu der nachlaufenden Schraube entlang eines Förderweges. Der Förderweg wird nachstehend im Detail beschrieben.

Dabei wird im Sinne der vorliegenden Anmeldung der Weg, welchen die Schrauben zwischen der Zuführposition 7, an welcher die Zuführeinrichtung 2 angeordnet ist, und der Ausstoßeinrichtung als Förderweg bezeichnet. Der Weg, auf dem sich die Aufnahmen für die einzelnen Schrauben in der Fördereinrichtung 3 insgesamt bewegen, wird als Bewegungspfad bezeichnet.

Die Fördereinrichtung 3 umfasst ein Schienenelement 8 und eine Mehrzahl von an diesem Schienenelement 8 geführten Laufwagen 9. Der Bewegungspfad der Aufnahmen für die Schrauben ist im Wesentlichen O-förmig mit zwei geraden, einander gegenüberliegenden Abschnitten 10, 11 und zwei gekrümmten Abschnitten 12, 13, welche den Bewegungspfad der Laufwagen jeweils um 180° umlenken. Die beiden Prüfeinheiten 4, 5 sind an dem geraden Abschnitt 10 des Bewegungspfades und damit des Förderweges der Schrauben angeordnet. Die Anordnung der Prüfeinheiten entlang des geraden Abschnitts des Förderwegs weist zwei Vorteile auf, die nachfolgend genauer erläutert werden.

Jede der beiden Prüfeinheiten 4, 5 verfügt über einen Sensor 14, 15. Bei dem Sensor 14 der ersten Prüfeinheit 4 handelt es sich um eine CCD-Kamera zur visuellen Prüfung der einzelnen Schrauben. Demgegenüber ist der Sensor 15 der zweiten Prüfeinheit 5 ein Wirbelstrommesskopf zum Erfassen von Rissen in den einzelnen Schrauben. Da die beiden Prüfeinheiten 4, 5 entlang des geraden Abschnitts 10 des Förderweges angeordnet sind ändert sich der Abstand der einzelnen Prüflinge von dem jeweiligen Sensor 14, 15 entlang der Messstrecke, die auf dem geraden Abschnitt des Förderweges liegt, nicht. Daher müssen Artefakte, welche aufgrund einer gekrümmten Messstrecke durch einen sich ändernden Abstand zwischen Prüfobjekt und Sensor auftreten, nicht herausgerechnet werden.

Die Fördereinrichtung 3 ist modular aus einer Mehrzahl von lösbar und austauschbar miteinander verbundenen Segmenten aufgebaut. Die gezeigte Fördereinrichtung 3 besteht aus zwei kopfseitigen Segmenten 16, welche die gekrümmten Abschnitte des Schienenelements 8 tragen. Die gekrümmten Abschnitte des Schienenelements 8 bewirken eine Umlenkung um jeweils 180°. Zwischen diesen beiden kopfseitigen Segmenten 16 sind zwei gerade Segmente 17 vorgesehen, welche jeweils zwei einander gegenüberliegende, gerade Schienenabschnitte tragen. Die geraden Segmente 17 der Fördereinrichtung lassen sich mit wenigen Handgriffen aus der Prüfanlage 1 entfernen bzw. in diese einsetzen. Auf diese Weise kann die Gesamtlänge der Prüfanlage, hier insbesondere die Länge der geraden Abschnitte des Förderweges vor Ort an die jeweilige Prüfaufgabe angepasst werden. In Abhängigkeit davon, wie lange der gerade Abschnitt des Förderweges ist, können mehr oder weniger Prüfeinheiten 4, 5 an dem geraden Förderweg aufgenommen werden und ganz unterschiedliche Prüfaufgaben erledigt werden.

Da die beiden Segmente 17 jeweils zwei gegenüberliegend angeordnete gerade Schienenabschnitte aufweisen, können beim Hinzufügen eines geraden Segmentes 17 jeweils an den gegenüberliegenden Seiten Prüfeinheiten aufgenommen werden.

Eines der gekrümmten Segmente 16 trägt zudem einen Antriebsmotor 18 für die Laufwagen 9 der Fördereinrichtung 1. Der Antrieb der einzelnen Laufwagen 9 erfolgt über einen über zwei Zahnriemenscheiben 19, 20 geführten Zahnriemen. Dabei ist jeder der Laufwagen 9 in den Zahnriemen eingehängt.

Jeder der Laufwagen 9 ist mit Hilfe einer Laufrollen 26 an dem Schienenelement 8 geführt. Dabei erstreckt sich das Schienenelement 8 zwischen jeweils zwei der vier Laufrollen 26 hindurch.

In der dargestellten Ausführungsform trägt, wie in Figur 4 abgebildet, jeder der Laufwagen 9 vier Aufnahmen 21 für jeweils genau eine Schraube. Jede der Aufnahmen 21 umfasst ein Langloch 23 als Durchbrechung im Sinne der vorliegenden Anmeldung in einer Trägerfläche 22. Dabei sind in der dargestellten Ausführungsform alle Langlöcher 23 in der gleichen Trägerfläche 22 vorgesehen. Jedes der Langlöcher 23 weist zum Rand der Trägerfläche 22 hin eine Öffnung auf, sodass die Schrauben mit ihren zylindrischen Abschnitten durch diese Öffnung in das Langloch 23 eingeführt werden können. Die Unterseiten der Schraubenköpfe liegen dann auf der Trägerfläche 22 auf. Während der Prüfung, d.h. bei dem Vorbeiführen der Schrauben an den Sensoren 14, 15 der Prüfeinheiten 4, 5 ist die Trägerfläche 22 im Wesentlichen horizontal ausgerichtet, so wie dies insbesondere in der Darstellung der Figur 4 zu sehen ist. Die horizontale Position der Trägerfläche 22 wird im Sinne der vorliegenden Anmeldung als erste Lage der Trägerfläche 22 bezeichnet.

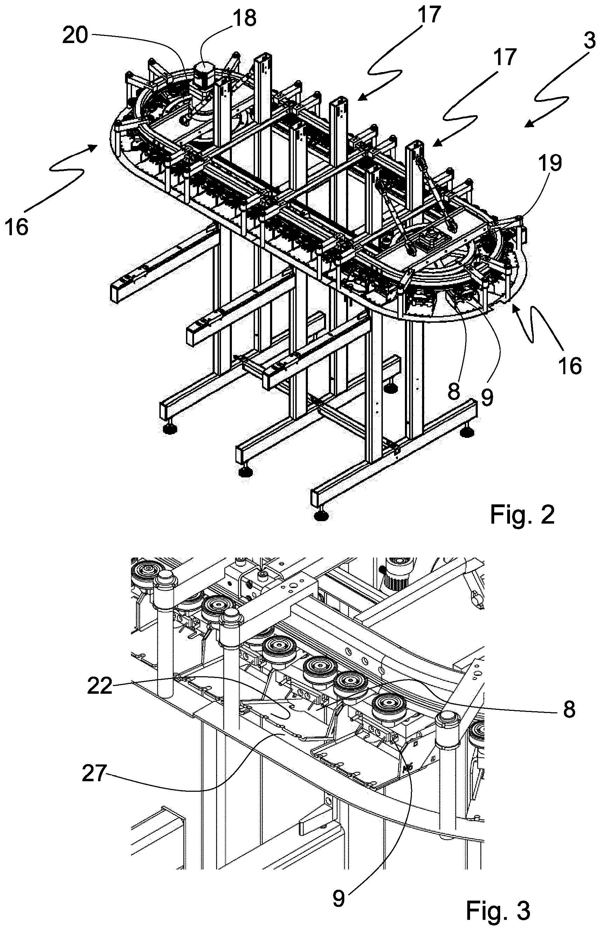

Die Schrauben werden wie oben ausgeführt und in Figur zeichnerisch veranschaulicht auf der Zuführschräge 6 der Zuführeinrichtung 2 durch die Schwerkraft getrieben den Aufnahmen 21 zugeführt. Der Unterwagen 24 des Laufwagens mit den Aufnahmen und insbesondere der Trägerfläche 22 ist gegenüber dem Oberwagen 25 mit den Laufrollen 26 um eine Schwenkachse schwenkbar ausgestaltet. Dabei wird der Unterwagen 24 so geschwenkt, dass sich die Trägerfläche 22 aus der ersten Lage in eine zweite Lage bewegt. Die zweite Lage der Trägerfläche 22 ist bei einem der Laufwagen 8 in den Figuren 3 und 5 zu sehen. In dieser zweiten Lage erstreckt sich die Trägerfläche 22 gegenüber der Horizontalen geneigt, wobei die Neigung der Trägerfläche 22 in der zweiten Lage der Neigung der Zuführschräge 6 der Zuführeinrichtung angepasst ist. Auf diese Weise können die Schrauben von der Zuführschräge 6 von den Schraubenköpfen auf die Trägerfläche 22 rutschen, ohne dass es eine Diskontinuität gibt, an welcher die Schrauben hängen bleiben können.

Die Zuführung ist weniger fehleranfällig. Das Schwenken der Unterwagen 24 und damit der Trägerfläche 22 an der Zuführposition 7 erfolgt mithilfe einer Betätigungsnocke 27, welche ortsfest an der Zuführposition 7 angeordnet ist. Erreicht ein Laufwagen 9 die Zuführposition 7, so drückt die Betätigungsnocke 27 den Unterwagen 24 aus der ersten Lage in die zweite Lage und beim Verlassen der Zuführposition verschwenkt der Unterwagen und damit die Trägerfläche 22 von der Schwerkraft getrieben zurück aus der zweiten Lage in die erste Lage. In der ersten, horizontalen Lage erfolgt an den Prüfeinheiten 4, 5 die Prüfung der Prüfobjekte.

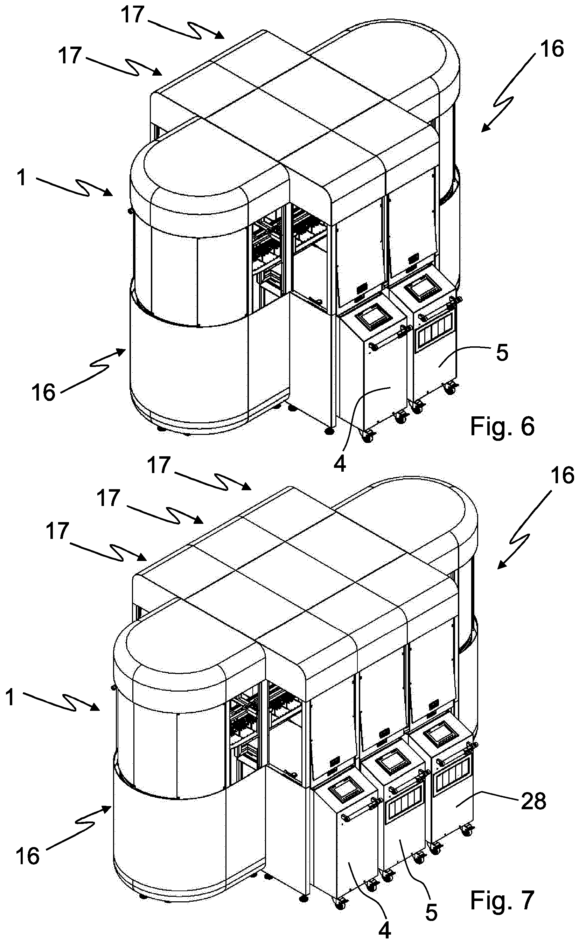

Die Figuren 6 und 7 verdeutlichen die Modularität der erfindungsgemäßen Prüfanlage 1. Bei der in den beiden Figuren 6 und 7 gezeigten Prüfanlage 1 handelt es sich um ein und dieselbe Anlage in zwei Konfigurationen. Dabei wurde die Anlage in der Konfiguration aus Figur 7 um eine zusätzliche Prüfeinheit 28 gegenüber der in Figur 6 dargestellten Konfiguration erweitert. In der Konfiguration aus Figur 6 umfasst die Prüfanlage die beiden kopfseitigen Segmente 16 der Fördereinrichtung sowie genau zwei gerade Segmente 17. An den beiden geraden Segmenten 17 sind die beiden auch schon in Figur 1 dargestellten Prüfeinheiten 4, 5 aufgenommen. Demgegenüber verfügt die umkonfigurierte Anlage aus Figur 7 über drei gerade Segmente 17 der Fördereinrichtung, sodass an dem dritten Segment die weitere Prüfeinheit 28 aufgenommen ist. Aufgrund Ihrer Modularität der Fördereinrichtung 3 lässt sich die Prüfanlage an ganz unterschiedliche Prüfanforderungen anpassen.

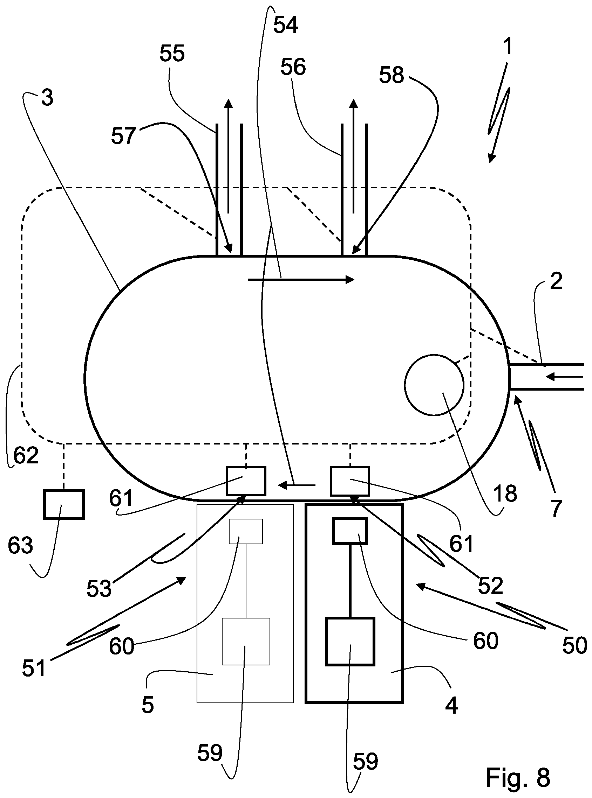

Figur 8 zeigt in einem Blockdiagramm eine Draufsicht auf die Prüfanlage als Figuren 1-3. Neben den mechanischen Komponenten sind in dem Blockschaltbild schematisch die Elemente zur Steuerung der Prüfanlage 1 gezeigt.

An einer Zuführposition 7 erfolgt wie zuvor beschrieben die Zuführung der vereinzelten Prüfobjekte, hier Schrauben. Die Prüfanlage 1 umfasst zwei Prüfeinheiten 4, 5, welche an einem ersten Prüfplatz 50 und einem zweiten Prüfplatz 51 an dem Förderweg der Fördereinrichtung 3 angeordnet sind. Durch die Plätze 50, 51 sowie die Ausgestaltung der Prüfeinheiten 4, 5 sind die jeweiligen Prüfpositionen 52, 53 festgelegt. An diesen Prüfpositionen erfolgt die eigentliche Prüfung, d. h. die Erfassung der Prüfobjekte. Die Prüfpositionen liegen in der Förderrichtung 54 betrachtet hinter der Zuführposition 7.

Wie oben ausgeführt weist die Prüfanlage 1 zwei Ausstoßeinrichtungen 55, 56 auf, die jeweils an einer Aussto βposition 57, 58 angeordnet sind.

Die beiden Prüfeinheiten 4, 5 verfügen jeweils über eine Prüfsteuerung 59 und eine Datenschnittstelle 60 in Form eines Steckverbinders. Diese Datenschnittstelle 60 wird im Sinne der vorliegenden Anmeldung als zweite Datenschnittstelle bezeichnet. Die Steckverbinder sind, wenn die Prüfeinheiten 4, 5 an dem jeweiligen Prüfplatz 50, 51 aufgenommen sind, in dazu komplementäre Steckverbinder 61 an dem verbleibenden Teil der Prüfanlage eingesteckt. Diese komplementären Steckverbinder 61 bilden im Sinne der vorliegenden Anmeldung die ersten Datenschnittstellen.

Die ersten Datenschnittstellen 61 sind über eine Busleitung 62 mit anderen Elementen der Prüfanlage verbunden. An den Bus 62 sind weiterhin eine Anlagensteuerung 63, die Ausstoßeinrichtungen 55, 56 sowie der Antrieb 18 der Fördereinrichtung 3 angebunden.

Die Anlagensteuerung 61 übernimmt in der dargestellten Ausführungsform lediglich das Fehlermanagement und die Verwaltung der Anlage 1. Insbesondere übernimmt die Anlagensteuerung 61 die Ansteuerung des Antriebsmotors 18, d.h. die Vorgabe der Fördergeschwindigkeit.

In der dargestellten Ausführungsform sind die Anlagenparameter wie die Geschwindigkeit der Prüfobjekte entlang des Prüfweges und die Belegung der Aufnahmen der Fördereinrichtung 3 vorab in der Prüfsteuerung 59 jeder Prüfeinheit 4, 5 abgespeichert. Beim erstmaligen Einfügen einer Prüfeinheit 4, 5 an dem jeweiligen Prüfplatz 50, 51 erfasst die Prüfsteuerung 59 an welchem Prüfplatz 50, 51 und damit an welcher Prüfposition 52, 53 sie angeordnet ist.

Zu diesem Zweck nutzt die dargestellte Ausführungsform eine Kennung des jeweiligen Prüfplatzes 50, 51, der in Form der Anschlussbelegung der Buchsen der Steckverbinder 61 der ersten Datenschnittstellen codiert sind.

Aus der Prüfposition 52, 53 berechnet die jeweilige Prüfsteuerung 59, wie lange es dauert, bis ein von ihr geprüftes Prüfobjekt von der Prüfposition 52, 53 bis zu der Ausstoßposition 57 bzw. 58 gefördert wurde. Auf diese Weise verfügt die jeweilige Prüfsteuerung 59 über alle Informationen, die es ihr ermöglichen, nicht nur die eigentliche Prüfung durchzuführen, sondern auch das Ergebnis der Prüfung umzusetzen, indem sie das jeweilige Prüfobjekt an der richtigen Ausstoßposition 57, 58 ausstößt.

In der dargestellten Ausführungsform laufen Teile, die die Prüfung mit den beiden Prüfeinheiten 4, 5 erfolgreich durchlaufen haben, von der in der Förderrichtung 54 zweiten Ausstoßeinrichtung 56 ausgestoßen. Hingegen werden Teile, welche die Qualitätsprüfung nicht bestanden haben, von der ersten Ausstoßeinrichtung 55 ausgestoßen.

Angenommen die erste Prüfeinheit 5 erfasst ein Teil, welches die Prüfung nicht bestanden hat, so gibt die Prüfsteuerung 59 einen Ausstoßbefehl über die Steckverbinder 60, 61 der ersten und zweiten Datenschnittstellen und den Bus 60 direkt an die erste Ausstoßeinrichtung 55. Die Ausstoßbefehl wird zu einem Zeitpunkt erzeugt, zu dem das Prüfobjekt diese erste Ausstoßeinrichtung 55 erreicht hat.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit es nicht ausdrücklich ausgeschlossen wurde oder technische Gegebenheiten derartige Kombination unmöglich oder sinnlos machen. Auf die umfassende, explizite Darstellung sämtlicher denkbarer Merkmalskombination wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichen

- 1: Prüfanlage
- 2: Zuführeinrichtung
- 3: Fördereinrichtung
- 4, 5, 28: Prüfeinheit
- 6: Zuführschräge
- 7: Zuführposition
- 8: Schienenelement
- 9: Laufwagen
- 10, 11: gerade Abschnitt
- 12, 13: gekrümmter Abschnitt
- 14, 15: Sensor
- 16: kopfseitige Segmente der Fördereinrichtung
- 17: gerade Segmente der Fördereinrichtung
- 18: Antriebsmotor
- 19, 20: Zahnriemenscheibe
- 21: Aufnahme
- 22: Trägerfläche
- 23: Langloch
- 24: Unterwagen
- 25: Oberwagen
- 26: Laufrolle
- 27: Betätigungsnocke
- 50, 51: Prüfplatz
- 52, 53: Prüfposition
- 54: Förderrichtung
- 55, 56: Ausstoßeinrichtung
- 57, 58: Ausstoßposition
- 59: Prüfsteuerung
- 60: Steckverbinder der zweiten Datenschnittstelle
- 61: Steckverbinder der ersten Datenschnittstelle
- 62: Bus
- 63: Anlagensteuerung

## Patentansprüche

1. Prüfanlage (1) für eine Mehrzahl von vereinzelbaren Prüfobjekten mit
einer Zuführeinrichtung (2) für die Mehrzahl von Prüfobjekten,
einer Fördereinrichtung (3) für die Mehrzahl von Prüfobjekten,
einer Prüfeinheit (4, 5) und
einer Ausstoßeinrichtung,
wobei die Zuführeinrichtung (2) derart ausgestaltet und angeordnet ist, dass die Mehrzahl von Prüfobjekten mittels der Zuführeinrichtung (2) an einer Zuführposition (7) der Fördereinrichtung (3) zuführbar ist,
wobei die Fördereinrichtung (3) eine Mehrzahl von Aufnahmen (21) aufweist, wobei jede der Aufnahmen (21) aus der Mehrzahl von Aufnahmen (21) derart ausgestaltet und angeordnet ist, dass in der Aufnahme (21) jeweils genau ein Prüfobjekt aus der Mehrzahl von Prüfobjekten entlang eines Förderweges förderbar ist und dass jeweils zwei Prüfobjekte aus der Mehrzahl von Prüfobjekten entlang des Förderweges einen von der Mehrzahl von Aufnahmen (21) vorgegebenen Abstand aufweisen,
wobei die Prüfeinheit (4, 5) an einer Prüfposition an dem Förderweg angeordnet ist und
wobei die Ausstoßeinrichtung an dem Förderweg hinter der Prüfeinheit (4, 5) angeordnet und derart ausgestaltet ist, dass die Mehrzahl von Prüfobjekten mittels der Ausstoßeinrichtung aus der Mehrzahl von Aufnahmen (21) der Fördereinrichtung (3) ausstoßbar ist,
wobei die Fördereinrichtung (3) derart ausgestaltet ist, dass der Förderweg zumindest einen geraden Abschnitt aufweist, und
wobei die Prüfposition an dem zumindest einen geraden Abschnitt angeordnet ist, **dadurch gekennzeichnet, dass**
die Prüfeinheit (4, 5) ein Gehäuse mit einem vorgegebenen Bauraum aufweist, wobei das Gehäuse mit der Fördereinrichtung (3) lösbar verbindbar ist, so dass die Prüfeinheit (4, 5) durch eine andere Prüfeinheit (4, 5) austauschbar ist, und
das Gehäuse eine vorgegebene Breite aufweist und wobei der gerade Abschnitt (10, 11) des Förderweges ein ganzzahliges Vielfaches der Breite ist, so dass eine Mehrzahl von Prüfeinheiten (4, 5) mit der gleichen Breite mit der Fördereinrichtung (3) verbindbar ist.

2. Prüfanlage (1) nach dem vorhergehenden Anspruch, wobei die Fördereinrichtung (3) derart ausgestaltet ist, dass die Mehrzahl von Aufnahmen (21) auf einem geschlossenen Bewegungspfad geführt ist, wobei der Förderweg einen Teil des Bewegungspfades einnimmt.

3. Prüfanlage (1) nach einem der vorhergehenden Ansprüche, wobei die Prüfanlage (1) zwei Prüfeinheiten (4, 5) aufweist, wobei die Prüfeinheiten (4, 5) an zwei Prüfpositionen entlang des Förderweges angeordnet sind, wobei der Förderweg zwei gerade Abschnitte (10, 11) aufweist und wobei eine erste der zwei Prüfpositionen an einem ersten der zwei geraden Abschnitte angeordnet ist und wobei eine zweite der zwei Prüfpositionen an einem zweiten der zwei geraden Abschnitte angeordnet ist.

4. Prüfanlage (1) nach einem der vorhergehenden Ansprüche, wobei jede aus der Mehrzahl von Aufnahmen (21) eine in einer Ebene liegende Trägerfläche (22) und eine Durchbrechung in der Trägerfläche (22) aufweist, wobei die Durchbrechung in der Ebene an einer Seite eine Öffnung aufweist, so dass ein Prüfobjekt aus der Mehrzahl von Prüfobjekten durch die Öffnung in die Durchbrechung einführbar ist und wobei die Trägerfläche (22) aus einer ersten Lage in eine zweite Lage bewegbar ist.

5. Prüfanlage (1) nach dem vorhergehenden Anspruch, wobei die Trägerfläche (22) um eine Schwenkachse aus der ersten Lage in die zweite Lage schwenkbar ist und wobei die Schwenkachse parallel zu einer Bewegungsrichtung der Aufnahme (21) ist.

6. Prüfanlage (1) nach Anspruch 4 oder 5, wobei die Zuführeinrichtung (2) eine Zuführschräge (6) aufweist, wobei die Zuführschräge (6) derart ausgestaltet und angeordnet ist, dass in einem Betrieb der Prüfanlage (1) die Mehrzahl von Prüfobjekten über die Zuführschräge (6) in Richtung einer aus der Mehrzahl von Aufnahmen (21) an der Zuführposition (7) rutschen, wobei die Trägerfläche (22) in der zweiten Lage parallel zu einem Übergabeabschnitt der Zuführschräge (6) ist.

7. Prüfanlage (1) nach einem der Ansprüche 4 bis 6, wobei die Trägerfläche (22) in der ersten Lage im Wesentlichen horizontal angeordnet ist.

8. Prüfanlage (1) nach einem der Ansprüche 4 bis 7, wobei die Fördereinrichtung (3) an der Zuführposition (7) eine ortsfeste Betätigungsnocke (27) aufweist, wobei die Aufnahme (21) und die Betätigungsnocke (27) derart ausgestaltet und angeordnet sind, dass die Betätigungsnocke (27) die Trägerfläche (22) aus der ersten Lage in die zweite Lage bewegt, wenn die Aufnahme (21) die Zuführposition (7) erreicht.

9. Prüfanlage (1) nach einem der vorhergehenden Ansprüche, wobei die Prüfeinheit (4, 5) mindestens einen Sensor (14, 15) umfasst, wobei der Sensor (14, 15) derart angeordnet ist, dass er an der Prüfposition eine Eigenschaft der Mehrzahl von Prüfobjekten erfasst, wobei vorzugsweise der Sensor (14, 15) ausgewählt ist aus einer Gruppe bestehend aus einem Wirbelstromsensor, einem Tastkopf, einem Leitfähigkeitssensor und einer Kamera oder einer Kombination davon.

10. Prüfanlage (1) nach einem der vorhergehenden Ansprüche, wobei die Fördereinrichtung (3) eine Führungsschiene (8) und eine Mehrzahl von an der Führungsschiene (8) geführten Laufwagen (9) umfasst, wobei jeder aus der Mehrzahl von Laufwagen (9) mindestens eine aus der Mehrzahl von Aufnahmen (21) trägt.

11. Prüfanlage (1) nach einem der vorhergehenden Ansprüche, wobei die Fördereinrichtung (3) eine Mehrzahl von Segmenten aufweist und wobei der gerade Abschnitt (10, 11) des Förderwegs ein ganzzahliges Vielfaches von Segmenten aufweist.

12. Prüfanlage (1) nach einem der vorhergehenden Ansprüchen, wobei die Prüfanlage (1) weiterhin
einen Prüfplatz (50, 51) an der Prüfposition der Prüfanlage (1),
eine Datenübertragungseinrichtung (62),
eine erste Datenschnittstelle (61) und
eine Kennung aufweist,
wobei die Prüfeinheit (4, 5, 28) umfasst
eine Prüfsteuerung (59) mit einer Ausleseeinrichtung und
eine mit der Prüfsteuerung (59) verbundenen zweite Datenschnittstelle (60),
wobei der Prüfplatz (50, 51) derart ausgestaltet ist, dass die Prüfeinheit (4, 5, 28) austauschbar mit dem Prüfplatz (50, 51) verbunden ist,
wobei die zweite Datenschnittstelle (60) zum Datenaustausch trennbar mit der ersten Datenschnittstelle (61) der Prüfanlage (1) verbunden ist,
wobei die Datenübertragungseinrichtung (62) zur Informationsübertragung wirksam zumindest mit der Ausstoßeinrichtung (55, 56) und über die ersten Datenschnittstelle (61) und die zweite Datenschnittstelle mit der Prüfeinheit (4, 5, 28) verbunden ist,
wobei die Kennung die Prüfposition (52, 53) eineindeutig identifiziert, wobei die Kennung derart kodiert ist, dass die Kennung bei einem Einfügen der Prüfeinheit (4, 5, 28) in den Prüfplatz (50, 51) von der Prüfeinheit (4, 5, 28) auslesbar ist,
wobei die Ausleseeinrichtung derart eingerichtet ist, dass in dem Betrieb der Prüfanlage (1) mit der Ausleseeinrichtung die Kennung auslesbar ist, und
wobei die Prüfsteuerung (59) derart eingerichtet ist, dass die Prüfsteuerung (59) bei einem Einfügen der Prüfeinheit (4, 5, 28) in den Prüfplatz (50, 51) die Kennung mittels der Ausleseeinrichtung ausliest.

13. Prüfanlage (1) nach dem vorhergehenden Anspruch, wobei die Kennung in einer an dem Prüfplatz (50, 51) angeordneten und von der Prüfeinheit (4, 5, 28) auslesbaren Kennungseinrichtung kodiert ist.

## Claims

1. Inspection system (1) for a plurality of separable inspection objects comprising
a feed device (2) for the plurality of inspection objects,
a conveying device (3) for the plurality of inspection objects,
an inspection unit (4, 5) and
an ejecting device,
wherein the feed device (2) is configured and disposed such that the plurality of inspection objects can be fed by means of the feed device (2) to a feed position (7) of the conveying device (3),
wherein the conveying device (3) comprises a plurality of receptacles (21), wherein each receptacle (21) of the plurality of receptacles (21) is configured and disposed such that exactly one inspection object of the plurality of inspection objects can be conveyed along a conveying path in said receptacle (21) and that two respective inspection objects of the plurality of inspection objects have a spacing along the conveying path that is defined by the plurality of receptacles (21),
wherein the inspection unit (4, 5) is disposed at an inspection position on the conveying path and
wherein the ejecting device is disposed behind the inspection unit (4, 5) on the conveying path and is configured such that the plurality of inspection objects can be ejected from the plurality of receptacles (21) of the conveying device (3) by means of the ejecting device,
wherein the conveying device (3) is configured such that the conveying path has at least one straight section, and
wherein the inspection position is disposed on the at least one straight section,
**characterised in that**
the inspection unit (4, 5) comprises a housing having a defined installation space, wherein the housing can be releasably connected to the conveying device (3) so that the inspection unit (4, 5) can be replaced with another inspection unit (4, 5), and
the housing has a defined width and wherein the straight section (10, 11) of the conveying path is an integer multiple of the width, so that a plurality of inspection units (4, 5) having the same width can be connected to the conveying device (3).

2. Inspection system (1) according to the preceding claim, wherein the conveying device (3) is configured such that the plurality of receptacles (21) are guided on a closed movement path, wherein the conveying path takes up a part of the movement path.

3. Inspection system (1) according to any one of the preceding claims, wherein the inspection system (1) comprises two inspection units (4, 5), wherein the inspection units (4, 5) are disposed at two inspection positions along the conveying path, wherein the conveying path comprises two straight sections (10, 11) and wherein a first of the two inspection positions is disposed on a first of the two straight sections and wherein a second of the two inspection positions is disposed on a second of the two straight sections.

4. Inspection system (1) according to any one of the preceding claims, wherein each one of the plurality of receptacles (21) comprises a support surface (22) lying in a plane and a perforation in said support surface (22), wherein the perforation in the plane comprises an opening on one side, such that an inspection object of the plurality of inspection objects can be inserted through the opening into the perforation and wherein the support surface (22) can be moved from a first position into a second position.

5. Inspection system (1) according to the preceding claim, wherein the support surface (22) can be pivoted about a pivot axis from the first position into the second position and wherein the pivot axis is parallel to a direction of movement of the receptacle (21).

6. Inspection system (1) according to Claim 4 or 5, wherein the feed device (2) comprises a feed bevel (6), wherein the feed bevel (6) is configured and disposed such that, when the inspection system (1) is in operation, the plurality of inspection objects slide over the feed bevel (6) in the direction of one of the plurality of receptacles (21) at the feed position (7), wherein, in the second position, the support surface (22) is parallel to a transfer section of the feed bevel (6).

7. Inspection system (1) according to any one of Claims 4 to 6, wherein, in the first position, the support surface (22) is disposed substantially horizontally.

8. Inspection system (1) according to any one of Claims 4 to 7, wherein the conveying device (3) comprises a stationary actuating cam (27) at the feed position (7), wherein the receptacle (21) and the actuating cam (27) are configured and disposed such that that the actuating cam (27) moves the support surface (22) from the first position into the second position when the receptacle (21) reaches the feed position (7).

9. Inspection system (1) according to any one of the preceding claims, wherein the inspection unit (4, 5) comprises at least one sensor (14, 15), wherein the sensor (14, 15) is disposed such that it senses a property of the plurality of inspection objects at the inspection position, wherein the sensor (14, 15) is preferably selected from a group consisting of an eddy current sensor, a probe, a conductivity sensor and a camera or a combination thereof.

10. Inspection system (1) according to any one of the preceding claims, wherein the conveying device (3) comprises a guide rail (8) and a plurality of carriages (9) guided on said guide rail (8), wherein each one of the plurality of carriages (9) carries at least one of the plurality of receptacles (21).

11. Inspection system (1) according to any one of the preceding claims, wherein the conveying device (3) comprises a plurality of segments and wherein the straight section (10, 11) of the conveying path comprises an integer multiple of segments.

12. Inspection system (1) according to any one of the preceding claims, wherein the inspection system (1) further comprises
an inspection station (50, 51) at the inspection position of the inspection system (1),
a data transmission device (62),
a first data interface (61) and
an identifier,
wherein the inspection unit (4, 5, 28) comprises
an inspection controller (59) comprising a read-out device and
a second data interface (60) connected to the inspection controller (59),
wherein the inspection station (50, 51) is configured such that the inspection unit (4, 5, 28) is interchangeably connected to the inspection station (50, 51),
wherein the second data interface (60) is separably connected to the first data interface (61) of the inspection system (1) for exchanging data,
wherein the data transmission device (62) is operatively connected at least to the ejecting device (55, 56) and via the first data interface (61) and the second data interface to the inspection unit (4, 5, 28) for transmitting information,
wherein the identifier biuniquely identifies the inspection position (52, 53),
wherein the identifier is encoded in such a way that the identifier can be read by the inspection unit (4, 5, 28) when the inspection unit (4, 5, 28) is inserted into the inspection station (50, 51),
wherein the read-out device is configured such that the identifier can be read with the read-out device when the inspection system (1) is in operation and
wherein the inspection controller (59) is configured such that the inspection controller (59) reads the identifier by means of the read-out device when the inspection unit (4, 5, 28) is inserted into the inspection station (50, 51).

13. Inspection system (1) according to the preceding claim, wherein the identifier is encoded in an identification device which is disposed at the inspection station (50, 51) and can be read by the inspection unit (4, 5, 28).

## Revendications

1. Système d'essai (1) pour un grand nombre d'objets à essayer qui peuvent être séparés, comprenant
un dispositif d'alimentation (2) pour le grand nombre d'objets à essayer,
un dispositif de transport (3) pour le grand nombre d'objets à essayer,
une unité d'essai (4, 5) et
un dispositif d'éjection,
le dispositif d'alimentation (2) étant configuré et disposé de façon telle que le grand nombre d'objets à essayer puisse être acheminé par le dispositif d'alimentation (2) à une position d'alimentation (7) du dispositif de transport (3),
le dispositif de transport (3) comprenant une pluralité de récepteurs (21), chacun des récepteurs (21) de la pluralité de récepteurs (21) étant configuré et disposé de façon telle que, dans le récepteur (21), exactement un objet à essayer du grand nombre d'objets à essayer puisse être transporté le long d'un trajet de transport et que, le long du trajet de transport, deux objets à essayer respectifs du grand nombre d'objets à essayer soient espacés d'une distance prédéterminée par la pluralité de récepteurs (21),
l'unité d'essai (4, 5) étant disposée à une position d'essai sur le trajet d'essai et le dispositif d'éjection étant disposé sur le trajet de transport en aval de l'unité d'essai (4, 5) et configuré de façon telle que le grand nombre d'objets à essayer puisse être éjecté de la pluralité de récepteurs (21) du dispositif de transport (3) moyennant le dispositif d'éjection,
le dispositif de transport (3) étant configuré de façon telle que le trajet de transport comprenne au moins une partie droite et
la position d'essai étant située sur ladite au moins une partie droite,
**caractérisé en ce que**
l'unité d'essai (4, 5) comprend un carter ayant un espace de construction prédéterminé, le carter pouvant être attaché de façon amovible au dispositif de transport (3) si bien que l'unité d'essai (4, 5) puisse être remplacée par une autre unité d'essai (4, 5) et
le carter a une largeur prédéterminée, et la partie droite (10, 11) du trajet de transport étant un multiple entier de la largeur si bien qu'une pluralité d'unités d'essai (4, 5) ayant la même largeur puisse être attachée au dispositif de transport (3).

2. Système d'essai (1) selon la revendication précédente, le dispositif de transport (3) étant configuré de façon telle que la pluralité de récepteur (21) soit mené sur un trajet de mouvement fermé, le trajet de transport occupant une partie du trajet de mouvement.

3. Système d'essai (1) selon l'une des revendications précédentes, le système d'essai (1) comprenant deux unités d'essai (4, 5), les unités d'essai (4, 5) étant disposées à deux positions d'essai le long du trajet de transport, le trajet de transport comprenant deux parties droites (10, 11) et une première des deux positions d'essai étant disposée sur une première des deux parties droites et une deuxième des deux positions d'essai étant disposée sur une deuxième des deux parties droites.

4. Système d'essai (1) selon l'une des revendications précédentes, chacune de la pluralité de récepteurs (21) comprenant une surface de support (22) située dans un même plan et un passage dans la surface de support (22), le passage dans le plan comprenant sur un côté une ouverture si bien qu'un objet à essayer du grand nombre d'objets à essayer puisse être introduit, à travers l'ouverture, dans le passage et la surface de support (22) pouvant être déplacée d'une première position à une deuxième position.

5. Système d'essai (1) selon la revendication précédente, la surface de support (22) pouvant être pivotée, autour d'un axe de pivotement, de la première position à la deuxième position et l'axe de pivotement étant parallèle à une direction de déplacement du récepteur (21).

6. Système d'essai (1) selon la revendication 4 ou 5, le dispositif d'alimentation (2) comprenant une rampe d'alimentation (6), la rampe d'alimentation (6) étant configurée et disposée d'une façon telle que, lors d'un fonctionnement du système d'essai (1), le grand nombre d'objets à essayer glisse sur la rampe d'alimentation (6) en direction de l'une de la pluralité de récepteurs (21) à la position d'alimentation (7), dans la deuxième position, la surface de support (22) étant parallèle à une partie de transfert de la rampe d'alimentation (6).

7. Système d'essai (1) selon l'une des revendications 4 à 6, la surface de support (22) étant disposée, dans la première position, sensiblement horizontalement.

8. Système d'essai (1) selon l'une des revendications 4 à 7, le dispositif de transport (3) comprenant, à la position d'alimentation (7), une came d'actionnement (27) stationnaire, le récepteur (21) et la came d'actionnement (27) étant configurés et disposés de façon telle que la came d'actionnement (27) déplace la surface de support (22) de la première position à la deuxième position lorsque le récepteur (21) arrive à la position d'alimentation (7).

9. Système d'essai (1) selon l'une des revendications précédentes, l'unité d'essai (4, 5) comprenant au moins un capteur (14, 15), le capteur (14, 15) étant disposé de façon telle qu'il saisisse, à la position d'essai, une caractéristique du grand nombre d'objets à essayer, le capteur (4, 5) étant choisi de préférence parmi un groupe constitué d'un capteur à courant de Foucault, d'une sonde, d'un capteur de conductivité et d'une caméra ou d'une combinaison de ceux-ci.

10. Système d'essai (1) selon l'une des revendications précédentes, le dispositif de transport (3) comprenant un rail de guidage (8) et une pluralité de chariots (9) guidée par le rail de guidage (8), chacun de la pluralité de chariots (9) comprenant au moins un de la pluralité de récepteurs (21).

11. Système d'essai (1) selon l'une des revendications précédentes, le dispositif de transport (3) comprenant une pluralité de segments et la partie droite (10, 11) du trajet de transport comprenant un multiple entier de segments.

12. Système d'essai (1) selon l'une des revendications précédentes, le système d'essai (1) comprenant en outre
une place d'essai (50,51) à la position d'essai du système d'essai (1),
un dispositif de transmission de données (62),
une première interface de données (61) et
un identifiant,
l'unité d'essai (4, 5, 28) comprenant
une commande d'essai (59) avec un dispositif de lecture et
une deuxième interface de données (60) reliée à la commande d'essai (59),
la place d'essai (50, 51) étant configurée de façon telle que l'unité d'essai (4, 5, 28) soit reliée à la place d'essai (50, 51) de façon remplaçable,
la deuxième interface de données (60) étant reliée de façon séparable, pour un échange de données, à la première interface de données (61) du système d'essai (1),
le dispositif de transmission de données (62) étant relié efficacement, pour une transmission d'informations, au moins au dispositif d'éjection (55, 56) et, par le biais de la première interface de données (61) et la deuxième interface de données (60), à l'unité d'essai (4, 5, 28),
l'identifiant identifiant clairement la position d'essai (52, 53), l'identifiant étant codé de façon telle que l'identifiant, lors d'une insertion de l'unité d'essai (4, 5, 28) dans la place d'essai (50, 51), puisse être lu par l'unité d'essai (4, 5, 28),
le dispositif de lecture étant configuré de façon telle que, lors d'un fonctionnement du système d'essai (1), l'identifiant puisse être lu avec le dispositif de lecture et
la commande d'essai (59) étant configurée de façon telle que la commande d'essai (59) lise, lors d'une insertion de l'unité d'essai (4, 5, 28) dans la place d'essai (50, 51), l'identifiant moyennant le dispositif de lecture.

13. Système d'essai (1) selon la revendication précédente, l'identifiant étant codé dans un dispositif d'identification disposé à la place d'essai (50, 51) et pouvant être lu par l'unité d'essai (4, 5, 28).
